# EUROPÄISCHE PATENTSCHRIFT

(11) **EP 2 401 413 B1**
(45) Veröffentlichungstag und Bekanntmachung des Hinweises auf die Patenterteilung: **30.11.2016**
(21) Anmeldenummer: 10712882.9
(22) Anmeldetag: 25.02.2010
(51) Int. Cl.: C22C 38/04

(54) **MIKROLEGIERTER KOHLENSTOFFSTAHL ALS TEXTURGEWALZTER BANDSTAHL INSBESONDERE FÜR FEDERELEMENTE**
MICROALLOYED CARBON STEEL FOR STEEL SHEET WITH ROLLED TEXTURE, IN PARTICULAR FOR SPRING PARTS
ACIER AU CARBONE MICRO-ALLIE POUR BANDE EN ACIER A TEXTURE LAMINEE, EN PARTICULIER POUR DES ELEMENTS DE RESSORT

(30) Priorität: 26.02.2009 DE 102009010442
(43) Veröffentlichungstag der Anmeldung: 04.01.2012
(73) Patentinhaber: C.D. Wälzholz GmbH, 58093 Hagen (DE)
(72) Erfinder: JUNIUS, Hans-Toni, 58239 Schwerte (DE); BUDDENBERG, Heino, 58300 Wetter (DE); HELLMANN, Michael, 58675 Hemer (DE); WILMES, Dirk, 58640 Iserlohn (DE)
(74) Vertreter: Schneider, Uwe
(86) Internationale Anmeldenummer: PCT/DE2010/000225
(87) Internationale Veröffentlichungsnummer: WO 2010/097078

(56) Entgegenhaltungen:
- EP-A1- 1 018 565
- EP-A1- 1 589 124
- EP-A1- 1 865 079
- WO-A1-2008/150056
- JP-A- H04 116 137
- JP-A- 2001 181 788
- JP-A- 2007 119 883

## Beschreibung

Die Erfindung betrifft einen Kohlenstoffstahl als texturgewalzten Bandstahl, insbesondere für Federn gemäß Oberbegriff des Anspruches 1.

Bandstahl wird in technischen Einsatzbereichen häufig zur Herstellung von Federmaterial, insbesondere auch von aufrollbaren Federn verwendet. Derartige Federn kommen z.B. in Kraftfahrzeug-Sicherheitsgurten, als Material für aufrollbare Maßbänder, Kabelaufroller oder auch als Aufrollelement von Hundeleinen und in vielen anderen Anwendungen zum Einsatz.

Im Stand der Technik wird die Herstellung von derartigen Aufrollfedern ausgehend vom Produkt Draht oder Band üblicherweise durch konventionelles Vergüten eines Bandstahls auf Martensitbasis oder durch isotherme Umwandlung in ein feinstreifiges, perlitisches Gefüge mit anschließender Kaltumformung (sog. texturgewalzter Bandstahl) vorgenommen. Hierzu werden typischerweise unlegierte Stähle eingesetzt. Unter texturgewalztem Bandstahl versteht man dabei alle Bandstähle und insbesondere Federbandstähle, die im Endzustand eine deutlich ausgeprägte Textur, d.h. eine Kristallorientierung aufweisen. Diese Kristallorientierung bewirkt eine Verbesserung der Federeigenschaften und eine Verminderung der Bruchgefahr durch Korrosion oder mechanische Beschädigung quer zur Kristallorientierung. Üblicherweise wird eine derartige Textur durch eine starke Kaltverformung des Werkstoffes durch Walzen oder auch durch Ziehen ohne eine Zwischenglühung hergestellt.

Das vorgewalzte Band (beispielsweise 1,5 mm dick) wird in einer kontinuierlich arbeitenden Vergüteanlage zuerst bei etwa 850 °C austenitisiert (der Kohlenstoff in Lösung gebracht), dann in einem Bleibad bei etwa 450 bis 500 °C abgeschreckt und so lange dort gehalten, bis die isotherme Umwandlung vollständig erfolgt ist. Das dabei entstehende feinlamellare Perlitgefüge heißt nach dem englischen Erfinder Sorbit bzw. Patentiergefüge. Ein gutes Patentiergefüge weist einen Lamellenabstand von etwa 0,1 µm auf. Die Patentierfestigkeit liegt umso höher, je feinstreifiger der Sorbit und je geringer der Abstand der Zementitlamellen ist.

Bei dem sich anschließenden, überwiegend reversierend durchgeführten Kaltwalzen treten sowohl in den Ferrit- als auch in den Zementitlamellen des Perlits erhebliche Verformungen auf. In Gefügebereichen, deren Lamellen parallel zur Walzrichtung angeordnet sind, verringert sich als Folge der Verformung der Lamellenabstand. Dagegen werden in Gefügebereichen, die senkrecht zur Walzrichtung liegen, die Lamellen zunächst wellenförmig und bei höheren Formänderungen sogar haarnadelförmig verbogen. Reine Faserstruktur liegt vor, sobald sich auf diese Weise, abgesehen von den Biegestellen, alle Gefügebereiche parallel zur Walzrichtung angeordnet haben.

Dieser aufwändige und komplexe Fertigungsprozess lässt sich metallkundlich folgendermaßen erläutern. Der Stahl ist bei der Umformung Einschränkungen unterworfen, da er sich als Ganzes umformen muss, ohne in einzelne Körner zu zerfallen. Dadurch muss jedes Korn an der Umformung teilnehmen, und jedes Korn muss diese Umformung mit seinem Nachbarkorn abstimmen, um den Zusammenhalt entlang ihrer Korngrenzen zu ermöglichen. Die Körner des Bandstahls haben allerdings unterschiedliche Orientierungen. Werden diese durch den Walzprozess mit einer äußeren Spannung beaufschlagt, so werden diejenigen Körner, die günstig orientierte Gleitsysteme, also einen hohen sog. Schmidfaktor (dem Umrechnungsfaktor zwischen außen angelegter Zug- und Druckspannung σ und in der Gleitebene wirkender Scherspannung τ) aufweisen, sich bereits verformen, während in anderen, weniger günstig orientierten Körnern die kritische Schubspannung noch nicht erreicht ist. Die Umformung eines einzelnen Korns führt also zu einer Formänderung, die von der sich plastisch nicht umformenden Umgebung nicht geteilt wird. Die Formänderung wird elastisch unterdrückt, was zu hohen inneren Spannungen führen kann, wodurch schließlich auch die kritische Schubspannung in den Nachbarkörnern erreicht wird. Erst wenn alle Körner des Bandstahls sich plastisch verformen, ist die Streckgrenze des Materials erreicht.

Zusätzlich zu dem oben genannten, festigkeitssteigernden Mechanismus durch Kaltwalzen, kann zusätzlich die Erhöhung der Festigkeit durch die sog. Mischkristallhärtung genutzt werden. Diese ist eine Folge der Wechselwirkung der Legierungsatome mit den Versetzungen, die zur Behinderung der Wechselwirkung führt. Die Wirkung der Fremdatome auf die Versetzungen kann dabei auf dreierlei Weise geschehen:
□ Parelastische Wechselwirkung: Dieser Gitterparametereffekt wird hervorgerufen durch die im Vergleich zu den Matrixatomen unterschiedliche Atomgröße der Fremdatome, deren Einbau im Kristallgitter Spannungen verursacht.
□ Dielastische Wechselwirkung: Dieser Schubmoduleffekt hat seine Wechselwirkung darin begründet, dass die Energie einer Versetzung dem Schubmodul G proportional ist.
□ Chemische Wechselwirkung: Dieser auch Suzuki-Effekt genannte Mechanismus beruht auf der Tatsache, dass die Energie der Stapelfehler von der Zusammensetzung abhängt.

Neben den gefügetechnischen Einflussgrößen werden die Eigenschaften des hier relevanten dünnwandigen gewalzten Stahls maßgeblich auch von der Oberflächentopografie beeinflusst. Eine geometrisch ideale, d.h. vollkommen glatte Oberfläche lässt sich mit den herkömmlichen technischen Mitteln nicht erzielen, vielmehr wird eine technische Oberfläche mit definierten Überlagerungen einzelner Gestaltabweichungen (Rauh- und Wellentiefen) erzeugt. Beim Kaltwalzen handelt es sich um eine gebundene Umformung (ebener Formänderungszustand). Hierbei wird die ungerichtete Oberfläche des entzunderten, gebeizten Warmbandes mit zunehmender Stichzahl zum Texturband gerichtet, bedingt durch die Relativbewegung zwischen Walze und Walzgut.

Die Walzstiche auf den Spezialgerüsten ebnen die Oberfläche des Stahles ein. Die Rauheitsabnahme beträgt in Abhängigkeit des Produktes zwischen 60 und 90 %. Sie hängt von der Ausgangsrauhigkeit, der Walzenrauhigkeit sowie von Formänderungswiderstand des Materials ab. Mit zunehmender Stichzahl strebt die Rauheit der Oberfläche einem Grenzwert zu. Variationsparameter zur Einstellung der geforderten Topografie sind u .a. Walzspaltgeometrie, Druckverteilung, Walzgeschwindigkeit und Bandzug. Die Arbeitswalze als Umformwerkzeug übt dabei entscheidenden Einfluss auf die Bandoberfläche aus. Ihr Oberflächenprofil verändert sich mit der Walzenreise. Die Schleifkontur einer frisch eingebauten Walze arbeitet sich zügig ab, besonders intensiv ist die Einebnung zu Beginn und erreichten dann asymptotisch einen bestimmten Grenzwert.

Mit unter Beachtung der vorstehend erwähnten Fertigungsparameter hergestellten Federbandstählen lassen sich hervorragende Federeigenschaften auch bei sehr hohen Lastspielzahlen erreichen. Diese Werkstoffe sind daher für die geschilderten speziellen Anwendungen weit verbreitet.

Es hat sich aber heraus gestellt, dass bei Federwerkstoffen für Aufrollfedern nur sehr geringer Banddicke im höchstbelasteten Bereich, z.B. bei der Herstellung von Aufrollfedern für Hundeleinen im Dickenspektrum von typischerweise 0,10-0,19 mm Banddicke, die in dem entstehenden Gefüge sich bildenden Gefügebestandteile nicht größer als etwa 20 µm und damit kleiner als etwa 1/5 der Banddicke des Federstahlbandes sein dürfen. Bei größeren Bestandteilen oder Einschlüssen kann ansonsten eine Kerbwirkung an den Einschlüssen oder Gefügebestandteilen auftreten, die zu einer Zerstörung des Bandstahles führen kann. Die Gewährleistung derartiger feinkörniger Gefüge ist bei der vorstehend beschriebenen konventionellen Herstellung entsprechender Federwerkstoffe bei den geforderten Blechdicken problematisch zu gewährleisten.

Aus der JP 2007 119883 A ist eine Stahllegierung gemäß Tabelle 1 unter No. C mit 0,64 % C, 0,16 % Si, 0,54 % Mn, 0,014 % P, 0,014 % S, 0,0,25 % Al, 0,0045 % N und 0,11 % Cr im angegeben, weiterhin sind neben den beiden ebenfalls angegebenen Bestandteilen Ti und Nb auch noch nennenswerte Anteile von B in Höhe von 0,0015 % und Mo in Höhe von 0,011 % angegeben, die für die Gefügebildung aus dem Warmband heraus von Wichtigkeit sind. Auch sind die gemäß der JP 2007 119883 A gewalzten Blechdicken und damit das Umformungsverhalten und dessen Auswirkungen auf die Gefügeveränderungen ganz anders ausgestaltet.

Aus der JP H04 116137 A ist eine hochzähe kaltgewalzte Stahlplatte mit hohem Kohlenstoffgehalt bekannt, doch beträgt die Dicke der Stahlplatte nach dem Kaltwalzen 1,2 mm. Bei dieser Dicke der Stahlplatte haben die bei der vorliegenden Erfindung so wichtigen feinlamellaren Gefügestrukturen keine so entscheidende Bedeutung.

Aufgabe der vorliegenden Erfindung ist es daher, einen gattungsgemäßen kalt texturgewalzten Bandstahl derart weiter zu entwickeln, dass auch bei sehr geringen Banddicken eine sichere Vermeidung der Rissbildung durch Kerbwirkung aufgrund zu grober Gefügebestandteile gewährleistet und die Materialeigenschaften gegenüber bekannten texturgewalzten Bandstählen nicht verschlechtert, ggf. sogar verbessert wird.

Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung geht aus von einem kaltgewalzten Kohlenstoffstahl mit (in Gew.-%)
- C: 0,63 - 0,85 %
- Si: max. 0,40 %
- Mn: 0,20 - 0,90 %
- P: max. 0,035 %
- S: max. 0,035 %
- Al: max. 0,060 %
- Cr: max. 0,40 %
- N: 0,003 - 0,010%, vorzugsweise 0,005 - 0,008%

mindestens einem Mikrolegierungselement ausgewählt aus Ti, Nb, V und
Zr mit einem Gesamtanteil von maximal 0,12 %, mit einem Mindestgehalt
von Titan Ti von 0,02 % oder Niob Nb von 0,02 % oder Vanadium von V 0,02 % oder Zirkon von Zr 0,02 %,
Rest Eisen und erschmelzungsbedingte Verunreinigungen,
wobei die Dicke des Kohlenstoffstahls in einem Dickenspektrum zwischen 0,10 und 0,19 mm Banddicke liegt und der Kohlenstoffstahl nach dem Kaltwalzen eine Zugfestigkeit im Bereich von 2400 - 3000 MPa aufweist.

Durch das mindestens eine Mikrolegierungselement wird eine Gefügefeinung erreicht, die sicher das Auftreten von Defekten in dem Gefüge vermeidet, die eine Kerbwirkung insbesondere bei der Verwendung für dünne Federbänder verhindert, wobei gleichzeitig eine Festigkeitssteigerung sowie eine Verbesserung der erreichbaren Dehnungen und damit der Umformbarkeit des Materials erzielt wird. Als Mikrolegierungselemente können Titan Ti, Niob Nb oder Vanadium V, ggf. auch Zirkon Zr einzeln oder auch in Kombination in Frage kommen, wobei die obere Grenze des Legierungsanteils sich aus der Notwendigkeit der Bindung der fein verteilten Karbide und Nitride und die untere Grenze des Legierungsanteils sich aus der einstellenden Ausscheidungshärtung ergibt. Versuche habe ergeben, dass die Gesamtanteile der Mikrolegierungselemente zwischen 0,02 und 0,12 Gewichtsprozent des Kohlenstoffstahls liegen sollten, um die beschriebene vorteilhafte Gefügeausbildung zu erreichen.

Beim Herstellen von warmgewalzten Stählen ist es zwar schon bekannt, Legierungsbestandteile zuzufügen, die eine Verringerung der Korngrößen des entstehenden Gefüges bewirken. So werden dort Mikrolegierungselemente zugesetzt, durch die ein warmgewalzter und anschließend abgekühlter Stahl ein feinkörniges Gefüge ausbildet. Das Warmwalzen ist hingegen eine Bearbeitungsverfahren für größere Blechdicken z.B. im Bereich vom 250 mm bis hinunter zu etwa 1 mm Blechdicke. Geringere Blechdicken lassen sich mit Hilfe des Warmwalzens in der Regel nicht herstellen, da sich ein dünneres Blech zwischen den einzelnen Walzdurchgängen nicht sicher auf der Warmwalztemperatur, in der Regel oberhalb von 720 °C, halten lässt. Die Verwendung derartiger mikrolegierter Warmwalzstähle ist damit auf Stahlprodukte relativ großer Dickenabmessungen beschränkt. Durch die in weiten Bereichen anderen Verformungseigenschaften der Gefüge warmgewalzter Stähle zu denjenigen kaltgewalzter Stähle und die aufgrund der höheren thermischen Aktivierung auftretenden Gefügeänderungen bei der Aufwärmung und der Abkühlung der warmgewalzten Stähle lassen sich derartige mikrolegierte Stähle für das Warmwalzen nicht für die hier vorliegenden Anforderungen benutzen, insbesondere hinsichtlich der oben angesprochenen Kernwirkung sowie der geforderten Oberflächeneigenschaften. Es hat sich statt dessen überraschend heraus gestellt, dass erfindungsgemäß zusammengesetzter Stahl mit einem entstehenden feinlamellaren Perlitgefüge (Sorbit) speziell für das Kaltwalzen die Anforderungen hinsichtlich der Festigkeitssteigerung sowie der Verbesserung der erreichbaren Dehnungen und damit der Umformbarkeit des Materials sowie die Gebrauchseigenschaften hinsichtlich erreichbarer Lastspielzahlen daraus hergestellter Federbauteile und geforderter Oberflächengüten in vorbildlicher Weise erfüllt. Gerade diese Eigenschaften bei den geforderten Dickenabmessungen lassen sich durch die erfindungsgemäße Gefügefeinung in qualitativ besonders guter und wirtschaftlicher Weise erreichen.

Die finale Festigkeit des texturgewalzten Stahles wird aus der Summe von Vergütungsfestigkeit und Umformverfestigung definiert. Legierungsgehalte von Mikrolegierungselementen mit einem Gehalt bis maximal 0,12 Gew.-% sollen hierbei durch Ausscheidungen und Kornfeinung Festigkeit und Zähigkeit steigern und damit die Funktionsweise und Lebensdauer der daraus gefertigten Federn verbessern bzw. steigern, insbesondere eine Erhöhung der Lastspiele möglich machen.

Die chemische Analyse kann grundsätzlich einer bereits heute verwendeten, genormten und bewährten Stahlgüte wie etwa den Stahlgüten C60S bis C80S oder dgl. Stahlgüten entsprechen, jedoch unter Zusatz von Vanadin, Niob oder Titan, ggf. auch Zirkon als Mikrolegierungsbestandteil, einzeln oder in Summe zugegeben.

Vanadium bildet ähnlich wie Niob und Titan feinstverteilte Nitride, Carbide oder Carbonitride in den Körnern und an Korngrenzen (wirksamster Teilchenabstand: 5 - 10 nm). Vanadium ist im γ-Gebiet auflösbar, ist ausscheidungshärtend und kornfeinend wirksam.

Von Vorteil ist es weiterhin, wenn der Kohlenstoffstahl einem Kaltwalzvorgang mit einem Kaltreduktionsgrad zwischen 60% und 90% unterworfen wird, um die gewünschte Orientierung der Gefügebestandteile zu erreichen.

Ein derartiger Kohlenstoffstahl kann bevorzugt als Werkstoff für texturgewalzten Bandfederstahl zum Herstellen von Aufrollelementen für Kraftfahrzeug-Sicherheitsgurte, für rollbare Maßbänder, für Kabelaufroller oder für Aufrollelemente von Hundeleinen sowie von vielen verschiedenen weiteren Halb- und Fertigprodukten genutzt werden.

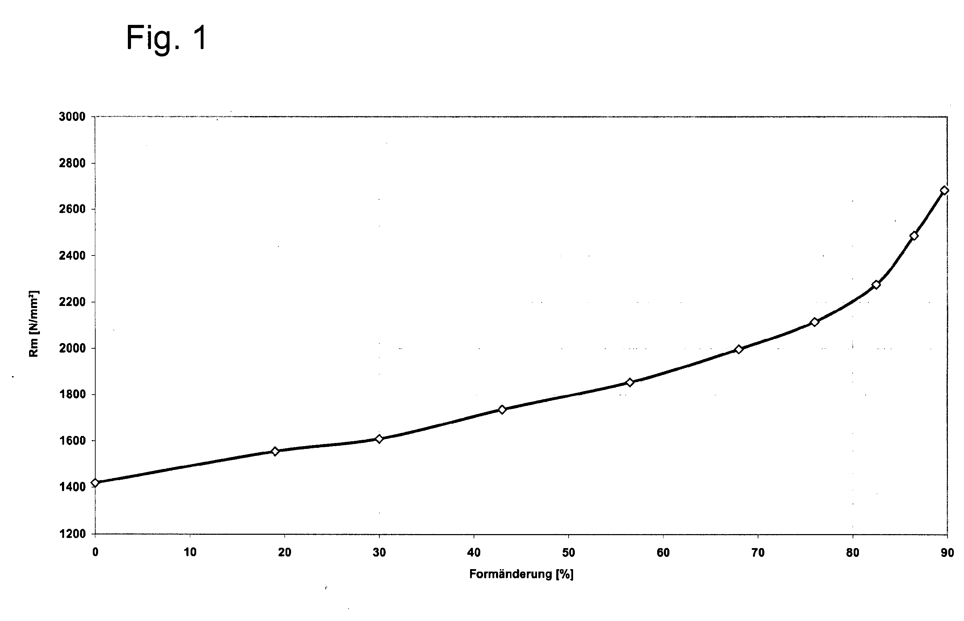

In der Figur 1 ist für eine beispielhafte Zusammensetzung der erfindungsgemäßen Kohlenstoffstahls die Verfestigungskurve abhängig von der Banddicke einmal für den kaltgewalzten und zum anderen für den kaltgewalzten und angelassenen Bandstahl qualitativ aufgetragen. Wie man erkennen kann, steigt die Festigkeit des Materials mit zunehmendem Kaltreduktionsgrad an und liegt im Bereich von Banddicken von 0.1 mm im Bereich von etwa 2450 N/mm²).

## Patentansprüche

1. Kaltgewalzter Kohlenstoffstahl, insbesondere Kohlenstoffstahl C80 oder C80S mit (in Gew.-%)
C 0,63 - 0,85 %
Si max. 0,40 %
Mn 0,20 - 0,90 %
P max. 0,035 %
S max. 0,035 %
Al max. 0,060 %
Cr max. 0,40 %
N 0,003 - 0,010%, vorzugsweise 0,005 - 0,008%
mindestens einem Mikrotegierungselement ausgewählt aus Ti, Nb, V und
Zr mit einem Gesamtanteil von maximal 0,12 %, mit einem Mindestgehalt
von Titan Ti von 0,02 % und/oder Niob Nb von 0,02 % und/oder Vanadium von V 0,02 % und/oder Zirkon von Zr 0,02 %,
Rest Eisen und erschmelzungsbedingte Verunreinigungen,
wobei die Dicke des Kohlenstoffstahls in einem Dickenspektrum zwischen 0,10 und 0,19 mm Banddicke liegt und der Kohlenstoffstahl nach dem Kaltwalzen eine Zugfestigkeit im Bereich von 2400 - 3000 MPa aufweist.

2. Kohlenstoffstahl gemäß Anspruch 1, **dadurch gekennzeichnet, dass** als Mikrolegierungselement (in Gew.-%) Titan Ti bis zu 0,12 %, vorzugsweise 0,05 - 0,10 % enthalten ist.

3. Kohlenstoffstahl gemäß Anspruch 1, **dadurch gekennzeichnet, dass** als Mikrolegierungselement (in Gew.-%) Niob Nb bis zu 0,12 %, vorzugsweise 0,05 - 0,10 % enthalten ist.

4. Kohlenstoffstahl gemäß Anspruch 1, **dadurch gekennzeichnet, dass** als Mikrolegierungselement (in Gew.-%) Vanadium V bis zu 0,12 %, vorzugsweise 0,08-0,10 % enthalten ist.

5. Kohlenstoffstahl gemäß Anspruch 1, **dadurch gekennzeichnet, dass** als Mikrolegierungselement (in Gew.-%) Zirkon Zr bis zu 0,12 %, vorzugsweise 0,08-0,10 % enthalten ist.

6. Kohlenstoffstahl gemäß einem der vorstehenden Ansprüche, **dadurch gekennzeichnet, dass** mehr als eines der Mikrolegierungselemente Ti, Nb, V oder Zr mit einem Gesamtanteil von 0,02 - 0,12 % enthalten ist.

7. Verfahren zur Herstellung eine texturgewalzten Federstahlbandes nach einem der Ansprüche 1 bis 6, **gekennzeichnet durch** einen Kaltwalzvorgang mit einem Kaltreduktionsgrad zwischen 60% und 99%.

8. Verwendung eines Kohlenstoffstahls nach einem der Ansprüche 1 bis 6 als Werkstoff für texturgewalzten Bandfederstahl zum Herstellen von Aufrollelementen für Kraftfahrzeug-Sicherheitsgurte, für rollbare Maßbänder, für Kabelaufroller oder für Aufrollelemente von Hundeleinen.

## Claims

1. Cold-rolled carbon steel, in particular carbon steel C80 or C80S with (in % by weight)
C 0.63 - 0.85%
Si max. 0.40%
Mn 0.20 - 0.90%
P max. 0.035%
S max. 0.035%
Al max. 0.060%
Cr max. 0.40%
N 0.003 - 0.010%, preferably 0.005 - 0.008%
at least one microalloying element choosen from Ti, Nb, V and Zr with a total maximum content of 0.12%, with a minimum content of titan Ti of 0,02 % and/or Niob Nb of 0,02 % and/or vanadium V of 0,02 % and/or zirconium Zr of 0,02 %, residual iron and impurities caused by melting,
wherein the thickness of the carbon steel is in a thickness range between 0,10 and 0,19 mm of band thickness and the carbon steel has a tensile strength after cold-rolling in the range of 2400-3000 MPa.

2. The carbon steel according to claim 1, **characterized in that** titanium Ti up to 0,12%, preferably 0,05-0,10% is contained as a micro-alloying element (in % by weight).

3. The carbon steel as claimed in claim 1, **characterized in that** niobium Nb up to 0,12%, preferably 0,05-0,10 is contained as a micro-alloying element (in % by weight).

4. The carbon steel according to claim 1, **characterized in that** vanadium V up to 0,12%, preferably 0,08-0,10%, is contained as a micro-alloying element (in % by weight).

5. The carbon steel according to claim 1, **characterized in that** zirconium Zr up to 0,12%, preferably 0,08-0,10% is contained as a micro-alloying element (in % by weight).

6. The carbon steel according to claim 1, **characterized in that** more than one of the microalloying elements Ti, Nb, V or Zr is contained in a total content of 0,02-0,12%.

7. A process for the production of a texturized rolled steel strip according to one of claims 1 to 6, **characterized by** a cold rolling process with a cold reduction degree of between 60% and 99%.

8. The use of a carbon steel according to one of claims 1 to 6 as a material for textile-rolled strip spring steel for the production of rolling elements for motor vehicle safety belts, for rollable measuring tapes, for cable reels, or for roll-on elements of dog leashes.

## Revendications

1. Acier au carbone laminé à froid, en particulier acier au carbone C80 ou C80S avec (en % en poids)
C 0,63 à 0,85 %
Si au max. 0,40 %
Mn 0,20 à 0,90 %
P au max. 0,035 %
S au max. 0,035 %
Al au max. 0,060 %
Cr au max. 0,40 %
N 0,003 à 0,010 %, de préférence, 0,005 à 0,008 %
au moins un élément de micro-alliage choisi parmi Ti, Nb, V et
Zr avec une proportion totale au maximum de 0,12 %, avec une teneur minimale en titane Ti de 0,02 % et/ou en niobium Nb de 0,02 % et/ou en vanadium V de 0,02 % et/ou en zirconium Zr de 0,02 %,
le reste étant du fer et des impuretés dues à la fusion,
dans lequel l'épaisseur de l'acier au carbone se situe dans un spectre d'épaisseur entre 0,10 et 0,19 mm d'épaisseur de bande et l'acier au carbone après le laminage à froid présente une résistance à la traction dans la plage de 2400 à 3000 MPa.

2. Acier au carbone selon la revendication 1, **caractérisé en ce qu'**est contenu comme élément de micro-alliage (en % en poids) du titane Ti jusqu'à 0,12 %, de préférence de 0,05 à 0,10 %.

3. Acier au carbone selon la revendication 1, **caractérisé en ce qu'**est contenu comme élément de micro-alliage (en % en poids) du niobium Nb jusqu'à 0,12 %, de préférence de 0,05 à 0,10 %.

4. Acier au carbone selon la revendication 1, **caractérisé en ce qu'**est contenu comme élément de micro-alliage (en % en poids) du vanadium V jusqu'à 0,12 %, de préférence de 0,08 à 0,10 %.

5. Acier au carbone selon la revendication 1, **caractérisé en ce qu'**est contenu comme élément de micro-alliage (en % en poids) du zirconium Zr jusqu'à 0,12 %, de préférence de 0,08 à 0,10 %.

6. Acier au carbone selon l'une des revendications précédentes, **caractérisé en ce qu'**est contenu plus d'un élément de micro-alliage Ti, Nb, V ou Zr avec une proportion totale de 0,02 à 0,12 %.

7. Procédé de fabrication d'une bande d'acier à ressort à texture laminée selon l'une des revendications 1 à 6, **caractérisé par** un processus de laminage à froid avec un degré de réduction à froid entre 60 % et 99 %.

8. Utilisation d'un acier au carbone selon l'une des revendications 1 à 6 comme matériau pour un acier à ressort en bande à texture laminée pour la fabrication d'éléments enroulés pour des ceintures de sécurité pour véhicule automobile, pour rubans de mesure enroulables, pour enrouleurs de câbles ou pour éléments d'enroulement de laisse pour chien.
